Europäisches Patentamt

European Patent Office

Office européen des brevets

(19)

(11)     EP 0 800 557 B1

(12)     **FASCICULE DE BREVET EUROPEEN**

| | |
|---|---|
| (45) Date de publication et mention de la délivrance du brevet:<br>**15.05.2002   Bulletin 2002/20** | (51) Int Cl.$^7$: **C08L 77/00**, C08L 77/06,<br>C08L 77/02, C09D 5/03,<br>C09D 177/00<br>// (C08L77/00, 23:00, 29:04) |
| (21) Numéro de dépôt: **95943282.4** | |
| (22) Date de dépôt: **27.12.1995** | (86) Numéro de dépôt international:<br>**PCT/FR95/01740** |
| | (87) Numéro de publication internationale:<br>**WO 96/20979 (11.07.1996 Gazette 1996/31)** |

(54) **COMPOSITION EN POUDRE A BASE DE POLYAMIDE POUR LE REVETEMENT DE SUBSTRATS METALLIQUES**

PULVERZUSAMMENSETZUNG AUF BASIS VON POLYAMID ZUR BESCHICHTUNG METALLISCHER SUBSTRATE

PULVERULENT POLYAMIDE COMPOSITION FOR THE COATING OF METAL SUBSTRATES

| | |
|---|---|
| (84) Etats contractants désignés:<br>**AT BE CH DE DK ES FR GB GR IE IT LI NL PT SE** | • **TEDOLDI, Arnaud**<br>**F-27170 Beaumont-le-Roger (FR)**<br>• **SAGE, Jean-Marc**<br>**F-69600 Oullins (FR)** |
| (30) Priorité:  **29.12.1994  FR 9415854** | |
| (43) Date de publication de la demande:<br>**15.10.1997   Bulletin 1997/42** | (74) Mandataire: **Neel, Henry**<br>**Atofina**<br>**D.C.R.D./D.P.I.**<br>**4, Cours Michelet**<br>**La Défense 10**<br>**92091 Paris La Défense Cedex (FR)** |
| (73) Titulaire: **Atofina**<br>**92800 Puteaux (FR)** | |
| (72) Inventeurs:<br>• **JULIEN, Olivier**<br>**F-27300 Bernay (FR)**<br>• **WERTH, Michael**<br>**F-27300 BERNAY (FR)** | (56) Documents cités:<br>**EP-A- 0 293 292**        **EP-A- 0 307 623**<br>**EP-A- 0 412 888**        **DE-A- 2 025 914** |

**Description**

DOMAINE TECHNIQUE

L'invention concerne une composition en poudre à base de polyamide pour le revêvêtement de substrats métalliques.

TECHNIQUE ANTERIEURE

Les polyamides sont couramment utilisés pour le revêtement des substrats métalliques, en raison notamment de leurs bonnes propriétés mécaniques telles que résistance à l'abrasion, aux chocs et leur inertie chimique vis-à-vis de nombreux produits tels que les hydrocarbures, les bases et les acides minéraux.

Mais il est connu que l'adhérence des polyamides sur les métaux est insuffisante par suite d'une mauvaise mouillabilité à l'état fondu des polyamides. Pour surmonter ce défaut, on a enduit le support métallique d'une sous-couche, appelée primaire d'adhérence, destinée à assurer l'accrochage et l'ancrage mécanique de la poudre polyamide. En général, le primaire d'adhérence que l'on utilise est à base de résines thermodurcissables et est appliqué sous forme de poudre ou en solution ou en suspension dans des solvants organiques ou aqueux. Il faut donc prévoir des installations supplémentaires pour l'élimination éventuelle des solvants et pour la cuisson du primaire avant l'enduction du substrat ainsi revêtu avec la poudre polyamide. De plus, la cuisson et/ou le séchage du primaire augmentent de façon non négligeable la durée des opérations de revêtement, et donc leur coût.

On a décrit dans le brevet EP 0 412 888 des mélanges de polyamides et de résines époxy/sulfonamide qui sont utilisables pour revêtir des substrats métalliques sans utiliser une sous-couche de primaire d'adhérence. Ces mélanges de polyamide et de résines époxy/sulfonamide en poudre peuvent s'appliquer au pistolet électrostatique sur le substrat. Il suffit ensuite de passer le substrat ainsi revêtu dans un four pour obtenir la fusion de la poudre et un revêtement uniforme. On peut aussi préchauffer le substrat au-dessus du point de fusion de la poudre et le tremper dans un lit fluidisé de la poudre.

DE 2 025 914 décrit des adhésifs thermofusibles en poudre à base de polyamide et d'EVA ou d'EVOH ou EVA/EVOH. Les polyamides mis en oeuvre ont une plage de ramollissement entre 80 et 130°C.

JP 02 008 230 A publié le 11 janvier 1990 décrit des poudres à base d'EVOH et pouvant contenir aussi du polyamide.

US 4 284 977 décrit des poudres de revêtement à base de polyamide, d'époxy et de polyvinylacétales.

EP 293 292 décrit des poudres à base de polyamide et de poly(méth)acrylates.

WO 9 501 403 publié après le dépôt de la présente demande mais bénéficiant d'une priorité antérieure, décrit des poudres à base de polyamide et d'EVOH, l'EVOH pouvant contenir du propylène, du butène-1 et du pentène-1.

EXPOSE DE L'INVENTION

On a maintenant trouvé une autre composition en poudre à base de polyamide pour revêtir des substrats métalliques sans primaire d'adhérence et qui présente une très bonne adhérence durable dans le temps.

La présente revendication concerne des compositions comprenant (i) au moins un polyamide de température de fusion comprise entre 130 et 270°C et au moins un copolymère (A) de l'éthylène avec au moins un comonomère choisi parmi les acides carboxyliques insaturés, les esters d'acides carboxyliques insaturés ou les esters vinyliques d'acides carboxyliques saturés et (ii) se présentant sous forme de poudre.

Les compositions de l'invention présentent aussi d'autres avantages :

- quand on applique la poudre au pistolet, le revêtement ne tombe pas au cours de l'introduction et du passage dans le four.
- une plaque métallique revêtue d'un film résultant de la fusion de la poudre déposée sur le substrat est entaillée, puis soumise à un brouillard salin, présente une croissance de corrosion limitée ;
- bonne résistance à l'eau chaude, ce qui permet par exemple de faire des revêtements de chauffe-eau domestiques.

La présente invention est une composition comprenant (i) au moins un polyamide et au moins un copolymère (A) de l'éthylène avec au moins un comonomère choisi parmi les acides carboxyliques insaturés, les esters d'acide carboxylique insaturés ou les esters vinyliques d'acides carboxyliques saturés et (ii) se présentant sous forme de poudre.

Les compositions de l'invention sont des mélanges intimes de polyamide et de copolymère (A), c'est-à-dire que chaque grain de la poudre comprend du polyamide et du copolymère (A).

Par polyamide au sens de l'invention, on entend les produits de condensation des lactames, des aminoacides ou des diacides avec les diamines et, en règle générale, tout polymère formé par des motifs reliés entre eux par des groupes amides.

Avantageusement, le polyamide a une température de fusion entre 130 et 270° C, comme par exemple, le PA-6, le PA-66, le PA-6,66, le PA-11, le PA-12, le PA-11,12, le PA-6,12.

On utilise avantageusement le polyamide 11, qu'on peut obtenir par condensation de l'acide amino-11 undécanoïque ou du lactame 11 et le polyamide 12, qu'on peut obtenir par condensation de l'acide amino-12 dodécanoïque ou du lactame 12. On peut aussi utiliser des polyamides 12-12.

On entend aussi par polyamide des polymères ayant des blocs polyamides dans leur chaîne. Ce sont par exemple les polyétheresteramides formés de blocs polyamides et de blocs polyéther reliés par des fonctions esters. Le brevet US 4,230,838 décrit une préparation possible de ces produits. On effectue la polymérisation d'un lactame en présence d'un diacide pour obtenir un polyamide à extrémités acide-carboxylique, puis on y ajoute un polyéther à extrémités hydroxy. Le polyéther est de préférence du polytétraméthylèneglycol, polypropylèneglycol ou du polyéthylèneglycol.

D'autres polymères ayant des blocs polyamides dans leur chaîne peuvent être préparés selon le brevet US 4,207,410. On mélange en présence d'eau un lactame, un diacide et un polyéther à extrémités hydroxy et on maintient la température. On obtient un polymère ayant des blocs polyamides et des blocs polyéthers mélangés avec du diacide, tous ces éléments étant reliés par des fonctions ester. On ne sortirait pas du cadre de l'invention en utilisant un mélange de ces polyamides.

A titre d'exemple de copolymère (A), on peut citer les copolymères de l'éthylène et de l'acide (méth)acrylique, les copolymères de l'éthylène et d'un ester de l'acide (méth)acrylique ou les copolymères de l'éthylène et de l'acétate de vinyle (EVA), ces copolymères (A) comprenant éventuellement des motifs anhydride d'acide carboxylique insaturé greffés ou copolymérisés.

Le copolymère (A) comprend avantageusement (i) au moins 50 % en poids de motifs éthylène, (ii) des motifs comme l'acide (méth)acrylique et/ou des esters de l'acide (méth)acrylique et au plus 6 % en poids d'anhydride maléique copolymérisé.

A titre d'exemple, le copolymère (A) peut comprendre 60 à 90 % en poids d'éthylène, 5 à 35 % en poids d'acrylate d'éthyle et 0,1 à 5 % en poids d'anhydride maléique et l'indice de fluidité est supérieur à 100 g/10 min selon les normes NFT 51016, ASTM D1238, DIN 53735 et ISO 1133.

Le copolymère (A) peut être aussi un copolymère de l'éthylène de l'acide (méth)acrylique et d'un anhydride d'acide carboxylique insaturé que l'on greffe par un produit monoaminé.

Ce produit monoaminé est par exemple la laurylamine, l'acide 11-aminoundécanoïque ou le bis(hydroxyéthylène)amine. Le greffage peut s'effectuer en extrudeuse ou en malaxeur, le nombre de moles de produit monoaminé qu'on greffe est au plus égal au nombre de moles de l'anhydride d'acide carboxylique insaturé.

Le copolymère (A) peut être aussi un copolymère comprenant des motifs éthylène, des motifs acide carboxylique insaturé et/ou ester d'acide carboxylique insaturé et des motifs epoxyde insaturé.

A titre d'exemple, on peut citer les copolymères de l'éthylène, de l'acide (méth)acrylique et/ou ester de l'acide (méth)acrylique et du (méth)acrylate de glycidyle ; avantageusement, ces copolyméres comprennent au moins 50 % en poids d'éthylène, des motifs acide (méth)acrylique et/ou esters de l'acide (méth)acrylique et jusqu'à 10 % en poids de (méth)acrylate de glycidyle.

Les compositions de l'invention peuvent comprendre, en plus du polyamide et du copolymère (A), des EVOH et/ou des alcools polyvinyliques (PVAL). On entend par EVOH des copolymères comprenant des motifs éthylène, alcool vinylique et éventuellement acétate de vinyle. On utilise avantageusement les EVOH dont la quantité d'alcool vinylique et éventuellement d'acétate de vinyle représente au moins 40 % en poids de l'EVOH avec un rapport acétate de vinyle sur alcool vinylique compris entre 0 et 0,7.

On utilise de préférence les copolymères comprenant en poids 40 à 60 % d'alcool vinylique et au plus 2 % d'acétate de vinyle et ayant un melt index compris entre 5 et 20 g/10 min mesuré à 210° C sous une charge de 2,16 kg pour une filière de 2,095 mm).

L'EVOH peut aussi être modifié par exemple par greffage avec un anhydride d'acide carboxylique insaturé par extrusion réactive. On peut greffer par l'anhydride phtalique en extrudeuse vers 160° C.

On peut aussi modifier l'EVOH par l'acide phosphorique, phosphoreux, hypophosphoreux ou l'acide borique par mélange en extrudeuse vers 160° C.

On peut aussi greffer sur l'EVOH de l'acide parahydroxybenzoïque par extrusion réactive à environ 250° C avec un fort dégazage.

On peut aussi greffer l'EVOH par un polyamide ou un oligomère de polyamide. On peut utiliser une extrusion réactive vers 250° C sous catalyse acide. De préférence, le polyamide est un oligomère de polyamide de $\overline{M}_n$ inférieure à 5 0.00 et terminé par une seule fonction acide. On peut par exemple obtenir cet oligomère par condensation d'un aminoacide en présence d'un monoacide comme l'acide laurique.

On peut aussi modifier les PVAL par acétalisation avec un aldéhyde comme par exemple le butyraldéhyde.

La présente invention concerne aussi des compositions comprenant (i) au moins un polyamide et au moins un EVOH et/ou un PVAL modifié, mais ne comprenant pas le copolymère (A) décrit plus haut et (ii) se présentant sous forme de poudre.

La quantité de copolymère (A), et éventuellement de copolymère (A) et d'EVOH et/ou de PVAL modifié ou non ou la quantité d'EVOH et/ou de PVAL modifié qu'on ajoute au polyamide, peut varier dans de larges limites. La qualité du revêtement obtenu aùgmente avec la quantité ajoutée.

Habituellement, il suffit d'une quantité de 1 à 300 parties (i) de copolymère (A) ou (ii) de copolymère (A) et d'EVOH et/ou de PVAL modifié ou non ou (iii) d'EVOH et/ou de PVAL modifié pour 1 000 parties de polyamide, avantageusement de 1 à 175 parties, et de préférence de 3 à 150 parties. La quantité d'EVOH et/ou de PVAL modifié ou non par rapport à la quantité de copolymère (A) est en général inférieure.

De préférence, les compositions de l'invention se présentent sous forme d'une matrice de polyamide dans laquelle sont dispersées des nodules (i) de copolymère (A) et éventuellement d'EVOH et/ou de PVAL modifié ou non ou (ii) d'EVOH et/ou de PVAL modifié. Avantageusement, les nodules de copolymère (A) ont de 0,1 à 0,5 $\mu$m de diamètre. Les nodules d'EVOH et/ou de PVAL modifié ou non sont inférieurs à 60 $\mu$m. La qualité de la dispersion des nodules dans la matrice de polyamide augmente avec la qualité du mélange des produits et le nombre de fonctions réactives présentes dans les nodules.

D'une manière générale, la granulométrie des poudres conformes à l'invention peut être comprise entre 5 $\mu$m et 1 mm.

Un premier procédé d'obtention de composition en poudre selon l'invention consiste à malaxer à l'état fondu (i) le copolymère (A) ou (ii) le copolymère (A) et l'EVOH et/ou le PVAL modifié ou non ou (iii) l'EVOH et/ou le PVAL modifié avec le polyamide dans un malaxeur de type approprié. La température de malaxage peut être comprise entre 150 et 300° C et de préférence entre 180 et 230° C.

On peut préparer un mélange maître ou un produit final.

Le produit final est broyé selon les techniques habituelles, à la granulométrie souhaitée pour le revêtement. On peut aussi procéder par atomisation ou précipitation.

Le mélange maître qui présente l'avantage d'assurer une bonne prédispersion du copolymère (A) et éventuellement de l'EVOH et/ou du PVAL modifié ou non ou de l'EVOH et/ou du PVAL modifié au sein de la matrice polyamide, peut alors être malaxé une nouvelle fois avec du polyamide selon le procédé cité au-dessus.

Un deuxième procédé d'obtention des compositions en poudre selon l'invention consiste à effectuer une (co) polycondensation des monomères de polyamide en présence (i) du copolymère (A) ou (ii) du copolymère (A) et de l'EVOH et/ou du PVAL modifié ou non ou (iii) de l'EVOH et/ou du PVAL modifié. A cet effet, le copolymère (A) et éventuellement l'EVOH et/ou le PVAL ou seulement l'EVOH et/ou le PVAL modifié est introduit dans l'autoclave en même temps que les monomères polyamides. La polymérisation est effectuée selon les procédures habituelles. On opère en général à une température comprise entre 150 et 300° C et de préférence entre 190 et 250° C.

Tout type d'appareil utilisé pour la polycondensation des polyamides peut être employé. On peut citer à titre d'exemple un réacteur équipé d'une agitation d'environ 50 tours/min, pouvant supporter une pression de 2 MPa. La durée de polycondensation peut être comprise entre 5 et 15 heures, et de préférence entre 4 et 8 heures. Lorsque les opérations de polycondensation sont terminées, on obtient un mélange sous forme de granulés que l'on broie à la granulométrie souhaitée. On peut aussi procéder par précipitation ou atomisation.

La présente invention, selon une première variante, concerne aussi une composition comprenant (i) au moins une poudre de polyamide et au moins une poudre d'un copolymère (A) de l'éthylène avec au moins un comonomère choisi parmi les acides carboxyliques insaturés, les esters d'acide carboxylique insaturés ou les esters vinyliques d'acides carboxyliques saturés.

On peut ajouter aussi des EVOH et/ou des PVAL modifiés ou non ou utiliser des mélanges de poudre de polyamide et de poudre d'EVOH et/ou de PVAL modifié et ne contenant pas de poudre de copolymère (A), c'est-à-dire que les compositions de cette première variante de l'invention sont les mêmes que celles de l'invention principale mais chaque grain de la poudre est soit du polyamide, soit du copolymère (A), soit de l'EVOH et/ou du PVAL.

Les granulométries sont les mêmes que dans la première forme de l'invention.

Avantageusement, les composants autres que le polyamide ont une granulométrie inférieure à 60 $\mu$m.

La quantité (i) de copolymère (A) ou (ii) de copolymère (A) et d'EVOH et/ou de PVAL modifié ou non ou (iii) d'EVOH et/ou de PVAL modifié pour 1 000 parties de polyamide peut être comprise entre 1 et 300 et de préférence 3 et 150.

Un procédé pour préparer ces mélanges de poudre consiste à mélanger à sec les différents composants ou un mélange maître, mis préalablement sous forme de poudre fine, et la poudre de polyamide. Ce mélange à sec ou "dry-blend" ne nécessite généralement pas d'appareillage spécial, il peut s'effectuer à température ambiante.

Selon une deuxième variante, les compositions de l'invention sont aussi des intermédiaires entre l'invention et la première variante, c'est-à-dire qu'elles peuvent être :

- soit des poudres de polyamide et de copolymère (A) dont chaque grain contient du polyamide et du copolymère (A) mélangées avec des poudres d'EVOH et/ou de PVAL modifié ou non ;
- soit des poudres de polyamide et d'EVOH et/ou de PVAL modifié ou non dont chaque grain contient du polyamide et de l'EVOH et/ou du PVAL mélangées avec des poudres de copolymères (A) ;
- ou toute autre combinaison.

La préparation des compositions selon cette deuxième variante de l'invention est une association des procédés déjà décrits plus haut.

Les compositions de l'invention peuvent aussi contenir des additifs tels que des charges, des pigments, des agents anti-cratère, réducteur, antioxydant....

- antioxydants comme l'iodure de cuivre combiné avec l'iodure de potassium, des dérivés de phénol et des amines encombrées,
- agents de fluidisation,
- charges renforçantes et nucléantes comme le carbonate de calcium et/ou de magnésium, la dolomie (carbonate double de calcium et magnésium), le quartz, le nitrure de bore, le kaolin (vendu sous le nom "Frantex®"), la wollastonite, le dioxyde de titane, les billes de verre, le talc, le mica, vendus sous les noms "Plastorite" (mélange de quartz, mica et chlorite), "Minex®" (carbonate de calcium), le noir de carbone,
- stabilisateurs UV comme, par exemple, des dérivés de résorcine, des benzotriazoles ou des salicylates,
- agents anti-cratères, ou agents d'étalement,
- pigments comme, par exemple, le dioxyde de titane, le noir de carbone, l'oxyde de cobalt, le titanate de nickel, le bisulfure de molybdène, les paillettes d'aluminium, l'oxyde de fer, l'oxyde de zinc, des pigments organiques comme les dérivés de phtalocyanine et d'anthraquinone.

Il est possible d'incorporer aux compositions de l'invention des additifs choisis parmi ceux décrits ci-dessus et dont les proportions respectives restent dans les limites habituellement rencontrées dans le domaine des compositions en poudre à base de polyamide pour le revêtement de substrats métalliques. En général, on incorpore jusqu'à 100 % en poids desdits constituants, c'est-à-dire que ces charges peuvent représenter le même poids que la quantité de polyamide et de copolymère (A) et éventuellement d'EVOH et/ou de PVAL ou que la quantité de polyamide et d'EVOH et/ou de PVAL modifié.

Ces additifs peuvent être incorporés par tout moyen dans les compositions de l'invention.

On peut les ajouter dans le polyamide selon le premier ou le deuxième procédé de préparation de la première forme de l'invention, ou les ajouter au mélange de poudres au cours de la préparation de la première variante de l'invention. Toutefois, dans cette première variante de l'invention, on évitera les grandes quantités d'additifs (par exemple, 50 à 100 parties pour 100 parties de polyamide). On préférera alors incorporer ces additifs dans le polyamide selon la première forme de l'invention.

On peut aussi par analogie avec la deuxième variante de l'invention préparer des compositions comprenant :

- soit une poudre ayant (i) des grains constitués chacun de polyamide et de copolymère (A) et éventuellement d'EVOH et/ou de PVAL ou de polyamide et d'EVOH et/ou de PVAL modifié et (ii) des additifs en poudre,
- soit une poudre ayant (i) des grains constitués chacun de polyamide et d'une partie des additifs et (ii) ayant des grains de copolymère (A) et (iii) des grains d'additifs,
- soit une poudre ayant des grains constitués chacun de polyamide, de copolymère (A) et des additifs,
- soit toute autre combinaison.

La présente invention concerne aussi l'utilisation des compositions en poudre telles que définies précédemment pour le revêtement de substrats métalliques et les substrats ainsi revêtus. Le substrat métallique peut être choisi dans une large gamme de produits. Il peut s'agir de pièces d'acier ordinaire ou galvanisé, de pièces en aluminium ou en alliage d'aluminium. L'épaisseur du substrat métallique peut être quelconque (par exemple de l'ordre du dixième de mm, comme de l'ordre de quelques dizaines de cm).

Selon une technique connue qui ne constitue pas en elle-même un objet de l'invention, le substrat métallique, et notamment en acier ordinaire, en aluminium ou en alliage d'aluminium a pu subir un ou plusieurs des traitements de surface suivants, cette liste n'étant pas limitative : dégraissage grossier, dégraissage alcalin, brossage, grenaillage ou sablage, dégraissage fin, rinçage à chaud, dégraissage phosphatant, phosphatations fer/zinc/tri-cations, chromatation, rinçage à froid, rinçage chromique.

A titre d'exemples de substrats métalliques aptes à être revêtus avec une composition selon l'invention, on peut citer : acier dégraissé, lisse ou grenaillé, acier dégraissé phosphaté, acier phosphaté fer ou zinc, acier galvanisé Sendzimir, acier électrozingué, acier galvanisé au bain, acier cataphorèse, acier chromaté, acier anodisé, acier sablé corindon, aluminium dégraissé, aluminium lisse ou grenaillé, aluminium chromaté.

La composition à base de polyamide selon l'invention est donc appliquée sous forme de poudre sur le substrat métallique. L'application de la composition en poudre peut s'effectuer selon les techniques d'application habituellement mises en oeuvre. Le broyage des poudres peut s'effectuer dans des appareils refroidis cryogéniquement ou à forte absorption d'air (broyeurs à couteaux, à marteaux, à disques...). Les particules de poudre obtenues sont sélectées dans des appareils appropriés pour éliminer des tranches granulométriques non souhaitées : par exemple, des grains trop gros et/ou trop fins.

Parmi les techniques d'application en poudre, on peut citer la projection électrostatique, le trempage en lit fluidisé, le lit fluidisé électrostatique (par exemple, celui décrit dans les brevets DD 277 395 et DD 251 510), techniques préférées pour réaliser le revêtement des substrats selon l'invention.

En projection électrostatique, la poudre est introduite dans un pistolet où elle est véhiculée par de l'air comprimé et passe dans une buse portée à un potentiel élevé généralement compris entre une dizaine et une centaine de kilovolts. La tension appliquée peut être de polarité positive ou négative. Le débit de poudre dans le pistolet est généralement compris entre 10 et 200 g/min, et de préférence entre 50 et 120 g/min. Lors de son passage dans la buse, la poudre se charge électrostatiquement. Les particules de poudre véhiculées par l'air comprimé viennent s'appliquer sur la surface métallique à revêtir, ladite surface étant elle-même reliée à la terre, c'est-à-dire à un potentiel électrique nul. Les particules de poudre sont retenues sur cette surface par leur charge électrostatique. Ces forces sont suffisantes pour que l'objet poudré puisse être revêtu et déplacé puis chauffé dans un four à une température qui provoque la fusion de la poudre.

La projection électrostatique des compositions à base de polyamide selon l'invention quelle que soit la polarité d'application présente un avantage certain car on pourra notamment utiliser les installations industrielles standard existantes qui sont conçues pour la projection électrostatique de revêtements en poudre en une seule polarité, dans ce cas, le substrat métallique subit une préparation de surface.

En projection électrostatique, la proportion de copolymère (A) et éventuellement d'EVOH et/ou de PVAL pour 1 000 parties de polyamide ou d'EVOH et/ou de PVAL modifié pour 1 000 parties de polyamide est avantageusement compris entre 3 et 150.

En général, on peut utiliser une poudre de granulométrie moyenne comprise entre 5 et 100 µm et de préférence entre 20 et 80 µm. L'épaisseur du revêtement est de préférence comprise entre 80 et 140 µm.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme, son épaisseur et l'épaisseur de revêtement désirée. Le substrat ainsi chauffé est ensuite plongé dans une composition de poudre selon l'invention maintenue en suspension par un gaz en circulation dans une cuve à fond poreux. La poudre fond au contact des surfaces métalliques chaudes et forme ainsi un dépôt dont l'épaisseur est fonction de la température du substrat et de sa durée d'immersion dans la poudre.

En trempage en lit fluidisé, la proportion préférée de copolymère (A) et éventuellement d'EVOH et/ou de PVAL pour 1 000 parties de polyamide ou d'EVOH et/ou de PVAL modifié pour 1 000 parties de polyamide, est avantageusement comprise entre 3 et 150. La granulométrie des poudres mises en oeuvre en lit fluidisé peut être comprise entre 10 et 1000 µm et de préférence, entre 40 et 160 µm. En général, l'épaisseur du revêtement peut être comprise entre 150 et 1 000 µm, et de préférence entre 350 et 450 µm.

On ne sortirait pas du cadre de l'invention en appliquant sur le substrat métallique dégraissé un primaire d'adhérence avant d'y appliquer les poudres de l'invention.

La présente invention concerne aussi un matériau composite comprenant un substrat métallique et comprenant un revêtement formé des compositions en poudre de l'invention. L'invention concerne aussi le matériau précédent, la couche de poudre ayant été fondue pour former un revêtement.

MANIERES DE REALISER L'INVENTION

*Exemples*

1) Dans les exemples, on utilise les produits suivants :

- <u>PA-11</u> : désigne un polyamide 11 de masse molaire $\overline{M}_n$ avant application comprise entre 9 000 et 15 000 (sauf le PA-11 de l'exemple 6).
- <u>Terpolymère 1/</u> : désigne un copolymère ayant des motifs éthylène, 6 % en poids de motifs acrylate d'éthyle et 3 % en poids de motifs anhydride maléique. L'indice de fluidité est 200 g/10 min selon NFT 51016.

Il est vendu sous la dénomination commerciale LOTADER® 8200.

- Terpolymère 5/ : désigne un copolymère ayant 44 % molaire de motifs éthylène, des motifs alcool vinylique, et un melt index 12 g/10 min mesuré à 210° C sous une charge de 2,16 kg et une filière de 2,095 mm.

Il est vendu sous la dénomination commerciale SOARNOL® A.

- Terpolymère 6/ : désigne le terpolymère 5/ greffé par 5 % d'anhydride phtalique (exprimé en % poids du terpolymère 6/).
- Terpolymère 8/ : désigne le terpolymère 5/ greffé par 10 % d'acide de parahydroxybenzoïque (exprimé en % poids du terpolymère 8/).
- Terpolymère 7/ : désigne le terpolymère 5/ modifié par l'acide hypophosphoreux selon le mode opératoire suivant : le terpolymère 5/ est granulé puis plongé dans une solution aqueuse d'acide hypophosporeux à 50 % en poids ; le tout est ensuite placé dans une étuve à 50 °C pendant 3 jours. Après lavage et essorage, les granulés sont séchés sous vide à 50 °C puis broyés.
- Terpolymère 9/ : désigne un mélange sur malaxeur "Brabender", à 160° C environ, de 80 % en masse de terpolymère 5/ et 20 % en masse de terpolymère 5/- greffé par 40 % en masse d'oligomère de polyamide 11 de masse $\bar{M}_n$ 1500 limité par l'acide laurique.
- Terpolymère 10/: désigne un terpolymère de type PVAL ayant réagi par acétalisation avec un aldéhyde dont la viscosité dynamique mesurée à 20 °C selon la norme DIN 53015 dans une solution de méthanol à 6 % est comprise entre 4 et 6 mPa.s et la zone de ramollissement mesurée selon la norme DIN ISO 426 est comprise entre 150 et 170 °C. Il est vendu sous la dénomination commerciale MOWITAL® B 30 T.
- Terpolymère 11/: désigne un terpolymère de type PVAL ayant réagi par acétalisation avec un aldéhyde dont la viscosité dynamique mesurée à 20 °C selon la norme DIN 53015 dans une solution de méthanol à 6 % est comprise entre 15 et 20 mPa.s et la zone de ramollissement mesurée selon la norme DIN ISO 426 est comprise entre 185 et 210 °C. Il est vendu sous la dénomination commerciale MOWITAL® B 60 T.

2/ Action anticorrosion

*Application directe sans primaire*

*2.1 Exemple des produits PA-11 et terpolymère 1/purs et des mélanges.*

Formules et caractéristiques des poudres avant application :

Le tableau 2.1 ci-dessous résume la composition des produits purs (2.1 et 2.2) et du mélange 2.3 réalisé en malaxeur à une température comprise entre 190 et 210°C et avec un temps de séjour de l'ordre de 30 secondes.

Les proportions indiquées sont exprimées en parties en poids (i.e. 5 parties signifie 5 g dans 1 000g de PA-11).

Le produit 2.2 est broyé cryogéniquement puis tamisé à 200 µm.

Les produits 2.1 et 2.3 sont broyés afin d'obtenir une poudre de granulométrie classique pour application d'une part par voie électrostatique et d'autre part par voie trempage.

La poudre 2.3 avant application est constituée d'une matrice de polyamide contenant des nodules de terpolymère 1/, ces phases étant de tailles essentiellement comprises entre 0,1 et 0,5 µm.

Tableau 2.1

| Produit | PA-11 | Terpolymère 1/ |
|---------|-------|----------------|
| 2.1 | 1000 | |
| 2.2 | | 1000 |
| 2.3 | 1000 | 80 |

Application :

Tous les substrats subissent un dégraissage avant l'application.

Le tableau 2.2 ci-dessous résume les conditions d'application.

Tableau 2.2

| Produit | Application électrostatique sur plaque d'acier 100*100*1mm | Application par trempage sur plaque d'acier 100*100*3mm |
|---|---|---|
| 2.1 | Substrat lisse ES négatif -20 kV Fusion dans étuve ventilée 4 min à 220°C | Substrat lisse Préchauffage substrat dans étuve ventilée 10 min à 330°C Trempage dans lit fluidisé 4 s |
| 2.2 | Substrat grenaillé ES négatif -60 kV Fusion dans étuve ventilée 5 min à 140°C | idem à 2.1 |
| 2.3 | Substrat grenaillé ES négatif -60 kV Fusion dans étuve ventilée 5 min à 220°C | idem à 2.1 |

Les films obtenus refroidissent librement à l'air ambiant.

Les films obtenus en application électrostatique ont une épaisseur de 110± 20 μm, en trempage de 400±50 μm.

Evaluation :

L'ensemble plaque plus film est ensuite évalué au brouillard salin, selon la nonne NF X 41 002. Les films sont incisés jusqu'au métal suivant la croix de Saint André et la croissance de la corrosion est mesurée visuellement à partir de cette blessure. Une corrosion totale correspond à une croissance de 35 mm.

Le tableau 2.3 ci dessous rassemble les résultats obtenus après 250 heures de brouillard salin.

Tableau 2.3

| Produit | Application électrostatique sur plaque d'acier 100*100*1mm | Application par trempage sur plaque d'acier 100*100*3mm |
|---|---|---|
| 2.1 | corrosion totale | 20 mm de corrosion |
| 2.2 | 12 mm de corrosion Nombreuses cloques de diamètre moyen 4 mm | corrosion totale |
| 2.3 | 1 mm de corrosion à la croix | 1 mm de corrosion à la croix |

*2.2 Exemple des produits PA-11 et terpolymère 1/formulés*

Formules et caractéristiques des poudres avant application :

Le tableau 2.4 ci-dessous résume la composition des mélanges réalisés en malaxeur à une température comprise entre 190 et 210°C et avec un temps de séjour de l'ordre de 30 secondes. Ils sont à base de PA-11 pur (encore appelé naturel) ou bien de PA-11 blanc. Dans ce cas, le PA-11 est coloré par 100 parties en poids de pigments blancs.

Tableau 2.4

| Produit | PA-11 naturel | PA-11 blanc | Terpolymère 1/ |
|---|---|---|---|
| 2.4.1 | 1000 | | 80 |
| 2.4.2 | 1000 | | 150 |
| 2.4.3 | | 1000 | 80 |
| 2.4.4 | | 1000 | 150 |

Les produits sont broyés afin d'obtenir une poudre de granulométrie classique pour application d'une part par voie électrostatique et d'autre part par voie trempage.

Les poudres obtenues avant application sont constituées d'une matrice de polyamide contenant des nodules de terpolymère 1/, ces phases étant de tailles essentiellement comprises entre 0,1 et 0,5 μm.

Application :

Tous les substrats subissent un dégraissage et un grenaillage avant l'application.

Les conditions d'application par voie électrostatique et trempage sont celles explicitées dans le tableau 2.2 pour le produit 2.3.

Evaluation :

L'ensemble plaque plus film est ensuite évalué au brouillard salin, selon la norme NF X 41 002. Les films sont incisés jusqu'au métal suivant la croix de Saint André et la croissance de la corrosion est mesurée visuellement à partir de cette blessure. Une corrosion totale correspond à une croissance de 35 mm.

Le tableau 2.5 ci-dessous rassemble les résultats obtenus après 2 000 heures de brouillard salin.

Tableau 2.5

| Mesure de la corrosion (exprimée en mm) | | |
|---|---|---|
| Produit | Application électrostatique sur plaque d'acier 100*100*1mm | Application par trempage sur plaque d'acier 100*100*3mm |
| 2.4.1 | 6 | 4 |
| 2.4.2 | 5 | 3 |
| 2.4.3 | 4 | 8 |
| 2.4.4 | 5 | 5 |

3) Le greffage du terpolymère 5/ augmente l'adhérence par rapport à celle obtenue avec le terpolymère 5/ non modifié :

Application directe sans primaire

Formules et caractéristiques des poudres avant application :

Le tableau 3.1 ci-dessous résume la composition des mélanges réalisés en malaxeur à une température comprise entre 190 et 210°C et avec un temps de séjour de l'ordre de 30 secondes. Ils sont à base de PA-11 pur (encore appelé naturel).

Les proportions indiquées sont exprimées en parties en poids (i.e. 5 parties signifie 5 g dans 1 000g de PA-11).

Les produits obtenus sont broyés afin d'obtenir une poudre de granulométrie classique pour application par voie trempage.

Le produit avant application est une poudre pour laquelle l'un des terpolymères 5/ à 8/ est présent dans la matrice polyamide sous forme de nodules, de taille inférieure à 60 $\mu$m.

Tableau 3.1

| Produit | PA-11 naturel | Terpolymère 5/ | Terpolymère 6/ | Terpolymère 8/ | Terpolymère 7/ |
|---|---|---|---|---|---|
| 3.1 | 1000 | 40 | | | |
| 3.2 | 1000 | | 40 | | |
| 3.3 | 1000 | | | 40 | |
| 3.4 | 1000 | | | | 40 |

Application :

Le substrat considéré est l'acier dégraissé et grenaillé.

Les autres conditions d'application par trempage sont celles explicitées dans le tableau 2.2 pour le produit 2.3.

Evaluation :

Après application, on évalue l'adhérence un jour après l'application suivant la norme NF T 58-112.

Une note de 0 à 4 est donnée en fonction de l'adhérence obtenue :

Classe 4: le film ne peut être séparé du métal

Classe 3: le film se sépare irrégulièrement, la liaison est totale sur au moins 50% de la surface

Classe 2: le film se sépare irrégulièrement, la force nécessaire à l'arrachement est élevée et se situe à la limite de la résistance du matériau

Classe 1: le film se sépare de la surface avec facilité, la liaison est faible

Classe 0: le matériau ne présente aucune liaison avec la surface.

Les classes de propriétés intermédiaires pourront être notées 0,5, 1,5, etc

Résultats :

Ils sont résumés dans le tableau 3.2 ci-dessous:

Tableau 3.2

| Produit | Adhérence |
|---------|-----------|
| 3.1 | 2,5 |
| 3.2 | 3 |
| 3.3 | 4 |
| 3.4 | 3,5 |

4 /Promoteur d'adhérence et de maintien de l'adhérence couplé avec l'EVOH : effet de SYNERGIE

Application directe sans primaire

Formules et caractéristiques des poudres avant application :

Le tableau 4.1 ci-dessous résume la composition des mélanges réalisés en malaxeur à une température comprise entre 190 et 210 °C et avec un temps de séjour de l'ordre de 30 secondes. Ils sont à base de PA-11 pur (encore appelé naturel).

Ces exemples sont ordonnés pour faire suivre les modifications par les terpolymères 5 (ou dérivés) du couplage avec le terpolymère 1/.

Les proportions indiquées sont exprimées en parties en poids (i-e 5 parties signifie 5 g dans 1000g de PA-11).

Les produits sont broyés afin d'obtenir une poudre de granulométrie classique pour application par voie trempage.

La poudre avant application est constituée d'une matrice de polyamide contenant des nodules de terpolymère 1/, ces phases étant de tailles essentiellement comprises entre 0,1 et 0,5 $\mu$m.

Dans le cas où la poudre contient aussi un terpolymère 5/ à 10/, ce dernier est également présent dans la matrice polyamide sous forme de nodules, de taille essentiellement inférieure à 60 $\mu$m.

Tableau 4.1

| Produit | PA-11 naturel | Terpolymères | | | | | | | |
|---------|---------------|-----|-----|-----|-----|-----|-----|-----|-----|
| | | 5/ | 6/ | 8/ | 9/ | 7/ | 10/ | 11/ | 1/ |
| 4.1 | 1000 | 40 | | | | | | | |
| 4.2 | 1000 | | | | | | | | 80 |
| 4.3 | 1000 | 40 | | | | | | | 80 |
| 4.4 | 1000 | | 40 | | | | | | |
| 4.5 | 1000 | | 40 | | | | | | 80 |
| 4.6 | 1000 | | | 40 | | | | | |
| 4.7 | 1000 | | | 40 | | | | | 80 |
| 4.8 | 1000 | | | | 40 | | | | |

Tableau 4.1  (suite)

| Produit | PA-11 naturel | Terpolymères | | | | | | | |
|---------|---------------|-----|-----|-----|-----|-----|------|------|------|
|         |               | 5/  | 6/  | 8/  | 9/  | 7/  | 10/  | 11/  | 1/   |
| 4.9     | 1000          |     |     |     | 40  |     |      |      | 80   |
| 4.10    | 1000          |     |     |     |     | 40  |      |      |      |
| 4.11    | 1000          |     |     |     |     | 40  |      |      | 80   |
| 4.12    | 1000          |     |     |     |     |     | 40   |      |      |
| 4.13    | 1000          |     |     |     |     |     | 40   |      | 80   |
| 4.14    | 1000          |     |     |     |     |     |      | 40   |      |
| 4.15    | 1000          |     |     |     |     |     |      | 40   | 80   |

Application :

Le substrat considéré est l'acier dégraissé et grenaillé.

Les autres conditions d'application par trempage sont celles explicitées dans le tableau 2.2 pour le produit 2.3.

Evaluation :

L'adhérence initiale des films sur substrat est mesurée avant test de brouillard salin et après 1000 heures de ce même test (voir partie 2/).

L'évaluation de l'adhérence se fait comme en 3/ sur le film revêtant la plaque des deux côtés et non entaillé.

Résultats :

Ils sont résumés dans le tableau 4.2 ci-dessous:

Tableau 4.2

| Produit | Adhérence initiale | Adhérence après 1000 h de brouillard salin |
|---------|--------------------|--------------------------------------------|
| 4.1     | 2,5                | 0,5                                        |
| 4.2     | 1,5                | 0                                          |
| 4.3     | 3,5                | 1                                          |
| 4.4     | 3                  | 0,5                                        |
| 4.5     | 4                  | 2                                          |
| 4.6     | 4                  | 0,5                                        |
| 4.7     | 4                  | 1,5                                        |
| 4.8     | 2                  | 0,5                                        |
| 4.9     | 4                  | 2                                          |
| 4.10    | 3,5                | 1                                          |
| 4.11    | 4                  | 2                                          |
| 4.12    | 2                  | 0,5                                        |
| 4.13    | 3,5                | 3                                          |
| 4.14    | 3                  | 1                                          |
| 4.15    | 4                  | 2                                          |

*L'exemple suivant illustre l'amélioration obtenue en formulant le prod naturel:*

Formules et caractéristiques des poudres avant application :

Le tableau 4.3 ci-dessous résume la composition des mélanges réalisés en malaxeur à une température comprise entre 190 et 210°C et avec un temps de séjour de l'ordre de 30 secondes.

Tableau 4.3

| Produit | PA-11 naturel | Terpolymères | | Pigments (TiO$_2$, noir de carbone,...) | Agent antioxydant et d'étalement |
|---|---|---|---|---|---|
| | | 5/ | 1/ | | |
| 4.10 | 1000 | | | | |
| 4.11 | 1000 | 40 | 80 | | |
| 4.12 | 1000 | 40 | 80 | 120 | 9 |

Application et évaluation :

Les conditions d'applications sont les mêmes que celles de l'exemple 2.2.
L'évaluation se fait par la même méthode que celle décrite dans l'exemple précédent.

Résultats :

ils sont résumés dans le tableau 4.4 ci dessous.
Ils mettent en valeur l'importance primordiale de la formulation sur les propriétés.

Tableau 4.4

| PRODUITS | 4.10 | 4.11 | 4.12 | 4.12 |
|---|---|---|---|---|
| Mode d'application<br>T: trempage<br>ES: électrostatique | T | T | T | ES |
| Adhérence initiale | 1 | 4 | 4 | 4 |
| Temps de brouillard salin pour que l'adhérence devienne inférieure à 1,5 | / | 1000h Adhérence =1 | >2000h | >2000h |
| Adhérence à 2000 h | 0 | 0,5 | 2 | 4 |

L'exemple suivant illustre l'amélioration obtenue en formulant le produit naturel avec le dérivé greffé du terpolymère 5/, le Terpolymère 6/ :

Formules et caractéristiques des poudres avant application :

Le tableau 4.5 ci-dessous résume la composition des mélanges réalisés en malaxeur à une température comprise entre 190 et 210°C et avec un temps de séjour de l'ordre de 30 secondes.

Tableau 4.5

| Produit | PA-11 naturel | Terpolymères | | | Pigments (TiO$_2$, noir de carbone,...) | Agent antioxydant et d'étalement |
|---|---|---|---|---|---|---|
| | | 5 | 6 | 1 | | |
| 4.12 | 1000 | 40 | | 80 | 120 | 9 |
| 4.5 | 1000 | | 40 | 80 | | |
| 4.13 | 1000 | | 40 | 80 | 120 | 9 |

Application et évaluation :

Les conditions d'applications sont les mêmes que celles de l'exemple 2.2.

L'évaluation se fait par la même méthode que celle décrite dans l'exemple précédent.

Résultats :

Ils sont résumés dans le tableau 4.6 ci dessous.

Ils mettent en valeur l'importance de la formulation et du greffage de l'EVOH sur les propriétés du revêtement en vieillissement au brouillard salin.

Tableau 4.6

| PRODUITS | 4.12 | 4.5 | 4.13 |
|---|---|---|---|
| Mode d'application | T | T | T |
| Adhérence initiale | 4 | 4 | 4 |
| Temps de brouillard salin pour que l'adhérence devienne inférieure à 1,5 | >2000 h | 1500 h Adhérence =1 | >2000 h |
| Adhérence à 2000 h | 2 | 1 | 3,5 |

5/ Auto applicabilité ES quand le copolymère (A) est ajouté en dry blend ou en masse, couplé ou non avec l'EVOH

Application directe sans primaire

*EXEMPLE 5.1 : Auto applicabilité lorsque le terpolymère 1/ est ajouté en dry-blend*

Formules et caractéristiques des poudres avant application :

Dans un mélangeur rapide de type Henschel®, on charge 1,5 kg de poudre PA-11, de viscosité inhérente 0,9, et 7,5g de la poudre de terpolymère 1/ (soit 5 parties en masse), de granulométrie inférieure à 60 µm.

Le PA-11 considéré est sans pigment (formule naturelle) ou bien contient 23% en masse de pigments blancs (formule blanche).

Les deux formules contiennent environ 2% en masse d'additifs d'étalement et d'antioxydant.

On brasse le mélange 100 s à une vitesse de 1800 tours/min. La poudre obtenue est mise en oeuvre telle quelle.

Dans ce cas, les poudres d'additifs polymériques étant mélangés à la poudre avant application, on ne peut plus parler de structure multiphase de la poudre. Par contre, le film final a une structure contenant des nodules de terpolymère 1/ de taille voisine de celle des grains de poudre de ce même produit ajouté en dry-blend.

Application :

La poudre obtenue précédemment est déposée à température ambiante par projection électrostatique sur une plaque d'acier qui a préalablement subi un dégraissage suivi d'un traitement de surface mécanique ou chimique (grenaillage, phosphatation..., voir tableau 5.1 ci-dessous). Lors de l'application, la surface métallique est à potentiel nul.

L'ensemble plaque plus poudre passe ensuite, sans attendre, dans un four ventilé maintenu à 220°C où il séjourne 5 minutes puis est retiré du four et refroidi librement à l'air.

Evaluation :

Le film obtenu est examiné pour détecter si des décrochages de poudre ont eu lieu lors de l'étuvage. Ceux-ci se manifestent par la présence de large zones de métal non recouvertes de polyamide.

Un classement de 0 à 4 est effectué selon les critères suivants :

Classé 0 : Plus de revêtement sur la plaque, tout le revêtement est tombé dans le four.
Classe 1 : La moitié au moins du revêtement est tombée lors de la fusion, laissant la plaque métallique à nu
Classe 2 : Il y a quelques points de décrochement du revêtement, généralement aux bords et aux angles des plaques.
Classe 3 : Pas de décrochement. Présence de défauts de mouillage : bulles, cratères.....
Classe 4 : Le revêtement est tendu et ne présente aucun défaut de mouillage et d'étalement.

Résultats :

Les tableaux 5.1 à 5.4 rassemblent les résultats en fonction des poudres de PA-11 de base et des conditions applicatives:

Tableau 5.1

| POUDRE NATURELLE APPLIQUEE EN POSITIF (+30 kV) | | |
|---|---|---|
| Support : acier : | Poudre sans additif | Poudre+5 parties de terpolymère 1/ |
| grenaillé | 1 | 4 |
| lisse | 1 | 4 |
| phosphatation Fer | 0 | 2 |
| phosphatation Zinc | 3 | 3 |
| Galvanisé dégraissé | 3 | 4 |
| lisse couverte huile de stockage | 3 | 4 |

Tableau 5.2

| POUDRE NATURELLE APPLIQUEE EN NEGATIF (-60 kV) | | |
|---|---|---|
| Support : acier : | Poudre sans additif | Poudre+5 parties de terpolymère 1/ |
| grenaillé | 1 | 4 |
| lisse | 1 | 4 |
| phosphatation Fer | 0 | 2 |
| phosphatation Zinc | 3 | 3 |
| Galvanisé dégraissé | 3 | 4 |
| lisse couverte huile de stockage | 3 | 4 |

Tableau 5.3

| POUDRE BLANCHE APPLIQUEE EN POSITIF (+30 kV) | | |
|---|---|---|
| Support : acier : | Poudre sans additif | Poudre+5 parties de terpolymère 1/ |
| grenaillé | 2 | 4 |
| lisse | 2 | 4 |
| phosphatation Fer | 0 | 3 |
| phosphatation Zinc | 3 | 3 |
| Galvanisé dégraissé | 3 | 3 |
| lisse couverte huile de stockage | 3 | 4 |

Tableau 5.4

| POUDRE BLANCHE APPLIQUEE EN NEGATIF (-60 kV) | | |
|---|---|---|
| Support : acier : | Poudre sans additif | Poudre+5 parties de terpolymère 1/ |
| grenaillé | 2 | 4 |
| lisse | 2 | 4 |
| phosphatation Fer | 1 | 3 |
| phosphatation Zinc | 2 | 3 |
| Galvanisé dégraissé | 3 | 3 |
| lisse couverte huile de stockage | 3 | 4 |

_EXEMPLE 5.2 : Auto applicabilité lorsque le terpolymère 1/ est ajouté en masse_

Dans cet exemple, le terpolymère 1/ est mélangé en masse au Polyamide.

Formules et caractéristiques des poudres avant application :

Le tableau 5.5 ci-dessous résume les préparations réalisées en malaxeur à une température comprise entre 190 et 210°C et avec un temps de séjour de l'ordre de 30 secondes. Le produit obtenu est ensuite broyé afin d'obtenir une poudre de granulométrie classique pour application par voie électrostatique.

Une poudre naturelle, une blanche et une grise sont ainsi exemplifiées.

La poudre blanche contient 10 parties en poids de pigments blancs, la poudre grise environ 19 parties en poids de pigments et 9 parties en poids d'agent d'étalement et antioxydant.

Les proportions indiquées sont exprimées en parties en poids (i.e. 5 parties signifie 5 g dans 1000g de PA-11).

La structure de la poudre obtenue est comparable à celle décrite dans la partie 3/.

Tableau 5.5

| Produit | PA-11 naturel | PA-11 Blanc | PA-11 gris | Terpolymère 5/ éthylène-alcool vinylique-acétate de vinyle | Terpolymère 1/ |
|---|---|---|---|---|---|
| 5.1 | 1000 | | | 40 | |
| 5.2 | 1000 | | | 100 | |
| 5.3 | | 1000 | | 40 | |
| 5.4 | | 1000 | | 100 | |
| 5.5 | 1000 | | | | 80 |
| 5.6 | 1000 | | | | 150 |
| 5.7 | | 1000 | | | 80 |
| 5.8 | | 1000 | | | 150 |
| 5.9 | | | 1000 | 40 | 80 |
| 5.10 | | | 1000 | 80 | 40 |

Application et évaluation :

Elles sont de même type que dans l'exemple précédent.

Les applications par projection électrostatiques sont effectuées sur des plaques d'acier de 100*100*1mm préalablement grenaillées et dégraissées.

Résultats :

Ils sont résumés dans le tableau 5.6 ci-dessous :

Tableau 5.6

| Produit | ES positif +30 kV | ES négatif - 60 kV |
|---------|-------------------|--------------------|
| 5.1 | classe 1 | classe 1 |
| 5.2 | classe 1 | classe 1 |
| 5.3 | classe 1 | classe 1 |
| 5.4 | classe 1 | classe 1 |
| 5.5 | classe 4 | classe 4 |
| 5.6 | classe 4 | classe 4 |
| 5.7 | classe 4 | classe 4 |
| 5.8 | classe 4 | classe 4 |
| 5.9 | classe 4 | classe 4 |
| 5.10 | classe 4 | classe 4 |

6/Tenue chauffe-eau, test 2733 :

Application sur primaire

Formules et caractéristiques des poudres avant application :

Le tableau 6.1 ci-dessous résume la composition des préparations réalisées en malaxeur à une température comprise entre 190 et 210°C et avec un temps de séjour de l'ordre de 30 secondes. Le produit obtenu est ensuite broyé afin d'obtenir une poudre de granulométrie classique pour application par trempage.

Les proportions indiquées sont exprimées en parties en poids (i.e. 5 parties signifie 5 g dans 1000g de PA-11). Le PA-11 considéré a une masse moléculaire en nombre mesuré par GPC : $\overline{M}_n$ = 20 000 g/mol.

**Revendications**

1. Compositions comprenant (i) au moins un polyamide de température de fusion comprise entre 130 et 270°C et au moins un copolymère (A) de l'éthylène avec au moins un comonomère choisi parmi les acides carboxyliques insaturés, les esters d'acides carboxyliques insaturés ou les esters vinyliques d'acides carboxyliques saturés et (ii) se présentant sous forme de poudre.

2. Composition selon la revendication 1 dans laquelle le copolymère (A) est un copolymère de l'éthylène et de l'acide (méth)acrylique ou un copolymère de l'éthylène et d'un ester de l'acide (méth)acrylique, ou un copolymère de l'éthylène et de l'acétate de vinyle, ces copolymères comprenant éventuellement des motifs anhydride d'acide carboxylique insaturé greffés ou copolymérisés.

3. Composition selon la revendication 1 dans laquelle le copolymère (A) est un copolymère

   (i) de l'éthylène,
   (ii) de l'acide (méth)acrylique et/ou d'un ester de l'acide (méth)acrylique et
   (iii) d'un anhydride d'acide carboxylique insaturé, ledit copolymère (A) étant greffé par un produit monoaminé.

4. Composition selon la revendication 1 dans laquelle le copolymère (A) est un copolymère comprenant des motifs éthylène, des motifs acide carboxylique insaturé et/ou ester d'acide carboxylique insaturé et des motifs époxyde insaturé.

5. Composition selon les revendications 1 à 4 comprenant aussi des EVOH et/ou des PVAL.

6. Composition selon les revendications 1 à 5 comprenant des EVOH modifiés et/ou des PVAL modifiés,

- dans laquelle l'EVOH modifié désigne l'EVOH modifié par greffage avec un anhydride d'acide carboxylique insaturé par extrusion réactive ; l'EVOH modifié par l'acide phosphorique, phosphoreux, hypophosphoreux ou borique par mélange en extrudeuse vers 160°C ; l'EVOH greffé par de l'acide parahydroxybenzoïque par extrusion réactive à environ 250°C avec un fort dégazage ; l'EVOH greffé par un polyamide ou un oligomère de polyamide.
- dans laquelle le PVAL modifié désigne le PVAL modifié par acétalisation avec un aldehyde.

7. Composition selon les revendications 1 à 6, comprenant au moins une poudre de PA et au moins une poudre de copolymère (A).

8. Composition comprenant (i) au moins un polyamide et au moins un EVOH modifié et/ou un PVAL modifié mais ne comprenant pas le copolymère (A) et (ii) se présentant sous forme de poudre et ne comprenant pas simultanément un polyamide, un PVAL modifié et une résine époxyde,

- dans laquelle l'EVOH modifié désigne l'EVOH modifié par greffage avec un anhydride d'acide carboxylique insaturé par extrusion réactive ; l'EVOH modifié par l'acide phosphorique, phosphoreux, hypophosphoreux ou borique par mélange en extrudeuse vers 160°C ; l'EVOH greffé par de l'acide parahydroxybenzoïque par extrusion réactive à environ 250°C avec un fort dégazage ; l'EVOH greffé par un polyamide ou un oligomère de polyamide.
- dans laquelle le PVAL modifié désigne le PVAL modifié par acétalisation avec un aldehyde.

9. Composition selon la revendication 8 comprenant au moins une poudre de polyamide et au moins une poudre d'un EVOH modifié et/ou de PVAL modifié mais ne comprenant pas de poudre de copolymère (A),

- dans laquelle l'EVOH modifié désigne l'EVOH modifié par greffage avec un anhydride d'acide carboxylique insaturé par extrusion réactive ; l'EVOH modifié par l'acide phosphorique, phosphoreux, hypophosphoreux ou borique par mélange en extrudeuse vers 160°C ; l'EVOH greffé par de l'acide parahydroxybenzoïque par extrusion réactive à environ 250°C avec un fort dégazage ; l'EVOH greffé par un polyamide ou un oligomère de polyamide.
- dans laquelle le PVAL modifié désigne le PVAL modifié par acétalisation avec un aldehyde.

10. Composition (i) selon l'une quelconque des revendications 1 à 9 comprenant au moins un polyamide et

- soit un copolymère (A) ;
- soit le copolymère (A) et un EVOH modifié ou non et/ou un PVAL modifié ou non ;
- soit un EVOH modifié et/ou un PVAL modifié et ne comprenant pas le copolymère (A), (ii) se présentant sous forme de poudre, (iii) les différents constituants de la composition étant répartis entre des grains de poudre formés d'un seul constituant et des grains de poudre formés de plusieurs constituants,
- dans laquelle l'EVOH modifié désigne l'EVOH modifié par greffage avec un anhydride d'acide carboxylique insaturé par extrusion réactive ; l'EVOH modifié par l'acide phosphorique, phosphoreux, hypophosphoreux ou borique par mélange en extrudeuse vers 160°C ; l'EVOH greffé par de l'acide parahydroxybenzoïque par extrusion réactive à environ 250°C avec un fort dégazage ; l'EVOH greffé par un polyamide ou un oligomère de polyamide.
- dans laquelle le PVAL modifié désigne le PVAL modifié par acétalisation avec un aldehyde.

11. Compositions selon les revendications 1 à 9 **caractérisées en ce qu'**elles se présentent sous la forme d'une matrice de polyamide dans laquelle sont dispersés des nodules

(i) de copolymère (A)
ou (ii) de copolymère (A) et d'EVOH modifié ou non et/ou de PVAL modifié ou non
ou (iii) d'EVOH modifié et/ou de PVAL modifié,

- dans laquelle l'EVOH modifié désigne l'EVOH modifié par greffage avec un anhydride d'acide carboxylique insaturé par extrusion réactive ; l'EVOH modifié par l'acide phosphorique, phosphoreux, hypophosphoreux ou borique par mélange en extrudeuse vers 160°C ; l'EVOH greffé par de l'acide parahydroxybenzoïque par extrusion réactive à environ 250°C avec un fort dégazage ; l'EVOH greffé par un polyamide ou un oligomère de polyamide.
- dans laquelle le PVAL modifié désigne le PVAL modifié par acétalisation avec un aldehyde.

**12.** Composition selon l'une des revendications 1 à 11 comprenant aussi des additifs.

**13.** Matériau composite comprenant un substrat métallique et un revêtement formé de poudres selon l'une des revendications 1 à 12.

**14.** Matériau composite selon la revendication 13 dans lequel la couche de poudres a été fondue pour faire un revêtement.

**Claims**

**1.** Compositions comprising (i) at least one polyamide having a melting point between 130 and 270°C and at least one copolymer (A) of ethylene with at least one comonomer chosen from unsaturated carboxylic acids, esters of unsaturated carboxylic acids or vinyl esters of saturated carboxylic acids and (ii) being in powder form.

**2.** Composition according to Claim 1, in which the copolymer (A) is a copolymer of ethylene and a (meth)acrylic acid or a copolymer of ethylene and an ester of a (meth)acrylic acid or a copolymer of ethylene and vinyl acetate, these copolymers optionally including grafted or copolymerized unsaturated carboxylic acid anhydride units.

**3.** Composition according to Claim 1, in which the copolymer

(A) is a copolymer of

(i) ethylene,
(ii) a (meth)acrylic acid and/or an ester of a (meth)acrylic acid and
(iii) an unsaturated carboxylic acid anhydride,

the said copolymer (A) being grafted by a monoaminated product.

**4.** Composition according to Claim 1, in which the copolymer (A) is a copolymer comprising ethylene units, unsaturated carboxylic acid and/or unsaturated carboxylic acid ester units and unsaturated epoxyde units.

**5.** Composition according to Claims 1 to 4, also comprising EVOHs and/or PVALs.

**6.** Composition according to Claims 1 to 5, comprising modified EVOHs and/or modified PVALs:

- in which modified EVOH denotes EVOH modified by grafting with an unsaturated carboxylic acid anhydride by reactive extrusion; EVOH modified by phosphoric, phosphorous, hypophosphorous or boric acid by mixing in an extruder at around 160°C; EVOH grafted by parahydroxybenzoic acid by reactive extrusion at about 250°C with strong degassing; EVOH grafted by a polyamide or a polyamide oligomer;
- in which modified PVAL denotes PVAL modified by acetalization with an aldehyde.

**7.** Composition according to Claims 1 to 6, comprising at least one PA powder and at least one copolymer (A) powder.

**8.** Composition comprising (i) at least one polyamide and at least one modified EVOH and/or modified PVAL but not comprising the copolymer (A) and (ii) being in powder form and not comprising at the same time a polyamide, a modified PVAL or an epoxyde resin:

- in which modified EVOH denotes EVOH modified by grafting with an unsaturated carboxylic acid anhydride by reactive extrusion; EVOH modified by phosphoric, phosphorous, hypophosphorous or boric acid by mixing in an extruder at around 160°C; EVOH grafted by parahydroxybenzoic acid by reactive extrusion at about 250°C with strong degassing; EVOH grafted by a polyamide or a polyamide oligomer;
- in which modified PVAL denotes PVAL modified by acetalization with an aldehyde.

**9.** Composition according to Claim 8, comprising at least one polyamide powder and at least one powder of a modified EVOH and/or modified PVAL but not comprising copolymer (A) powder:

- in which modified EVOH denotes EVOH modified by grafting with an unsaturated carboxylic acid anhydride by reactive extrusion; EVOH modified by phosphoric, phosphorous, hypophosphorous or boric acid by mixing in an extruder at around 160°C; EVOH grafted by parahydroxybenzoic acid by reactive extrusion at about 250°C with strong degassing; EVOH grafted by a polyamide or a polyamide oligomer;

- in which modified PVAL denotes PVAL modified by acetalization with an aldehyde.

10. Composition (i) according to any one of Claims 1 to 9, comprising at least one polyamide and

- either a copolymer (A);
- or the copolymer (A) and a modified or unmodified EVOH and/or a modified or unmodified PVAL;
- or a modified EVOH and/or a modified PVAL and not comprising the copolymer (A), (ii) being in powder form, (iii) the various constituents of the composition being distributed between the powder particles formed from a single constituent and powder particles formed from several constituents;
- in which modified EVOH denotes EVOH modified by grafting with an unsaturated carboxylic acid anhydride by reactive extrusion; EVOH modified by phosphoric, phosphorous, hypophosphorous or boric acid by mixing in an extruder at around 160°C; EVOH grafted by parahydroxybenzoic acid by reactive extrusion at about 250°C with strong degassing; EVOH grafted by a polyamide or a polyamide oligomer;
- in which modified PVAL denotes PVAL modified by acetalization with an aldehyde.

11. Compositions according to Claims 1 to 9, **characterized in that** they are in the form of a polyamide matrix in which nodules of

(i) copolymer (A) or
(ii) copolymer (A) and modified or unmodified EVOH and/or modified or unmodified PVAL or
(iii) modified EVOH and/or modified PVAL:

are dispersed,

- in which modified EVOH denotes EVOH modified by grafting with an unsaturated carboxylic acid anhydride by reactive extrusion; EVOH modified by phosphoric, phosphorous, hypophosphorous or boric acid by mixing in an extruder at around 160°C; EVOH grafted by parahydroxybenzoic acid by reactive extrusion at about 250°C with strong degassing; EVOH grafted by a polyamide or a polyamide oligomer;
- in which modified PVAL denotes PVAL modified by acetalization with an aldehyde.

12. Composition according to one of Claims 1 to 11, which also includes additives.

13. Composite comprising a metal substrate and a coating formed from powders according to one of Claims 1 to 12.

14. Composite according to Claim 13, in which the powder layer has been melted in order to form a coating.

**Patentansprüche**

1. Zusammensetzungen, die (i) mindestens ein Polyamid mit einer Schmelztemperatur, die im Bereich von 130 bis 270 °C liegt, und mindestens ein Copolymer (A) aus Ethylen und mindestens einem Comonomer, das unter den ungesättigten Carbonsäuren, den Estern ungesättigter Carbonsäuren und den Vinylestern gesättigter Carbonsäuren ausgewählt ist, enthalten und die (ii) in Form eines Pulvers vorliegen.

2. Zusammensetzung nach Anspruch 1, wobei das Copolymer (A) ein Copolymer aus Ethylen und (Meth)acrylsäure oder ein Copolymer aus Ethylen und einem Ester der (Meth)acrylsäure oder ein Copolymer aus Ethylen und Vinylacetat ist, wobei diese Copolymere gegebenenfalls Einheiten eines Anhydrids einer ungesättigten Carbonsäure enthalten, die aufgepfropft oder copolymerisiert sind.

3. Zusammensetzung nach Anspruch 1, wobei das Copolymer (A) ein Copolymer aus

(i) Ethylen,
(ii) (Meth)acrylsäure und/oder einem (Meth)acrylsäureester und
(iii) einem Anhydrid einer ungesättigten Carbonsäure

ist, wobei das Copolymer (A) mit einer Monoamin-Verbindung gepfropft ist.

4. Zusammensetzung nach Anspruch 1, wobei das Copolymer (A) ein Copolymer ist, das Ethylen-Einheiten, Einheiten einer ungesättigten Carbonsäure und/oder eines Esters einer ungesättigten Carbonsäure und Einheiten eines ungesättigten Epoxids enthält.

5. Zusammensetzung nach den Ansprüchen 1 bis 4, die außerdem EVOHs und/oder PVALs (Polyvinylalkohole) enthält.

6. Zusammensetzung nach den Ansprüchen 1 bis 5, die modifizierte EVOHs und/oder modifizierte PVALs enthält,

  - worin modifiziertes EVOH bedeutet: ein EVOH, das durch Pfropfung mit einem Anhydrid einer ungesättigten Carbonsäure durch reaktive Extrusion modifiziert ist; ein EVOH, das mit Phosphorsäure, phosphoriger Säure, hypophosphoriger Säure oder Borsäure durch Vermischen im Extruder bei etwa 160 °C modifiziert ist; ein EVOH, das mit p-Hydroxybenzoesäure durch reaktive Extrusion bei etwa 250 °C unter starker Entgasung gepfropft ist; ein EVOH, das mit einem Polyamid oder einem Polyamid-Oligomer gepfropft ist,
  - worin modifizierter PVAL einen PVAL bedeutet, der durch Acetalisierung mit einem Aldehyd modifiziert ist.

7. Zusammensetzung nach den Ansprüchen 1 bis 6, die mindestens ein PA-Pulver und mindestens ein Pulver aus Copolymer (A) enthält.

8. Zusammensetzung, die (i) mindestens ein Polyamid und mindestens ein modifiziertes EVOH und/oder mindestens einen modifizierten PVAL, nicht jedoch das Copolymer (A) enthält und (ii) in Form eines Pulvers vorliegt und nicht gleichzeitig ein Polyamid, einen modifizierten PVAL und ein Epoxidharz enthält,

  - worin modifiziertes EVOH bedeutet: ein EVOH, das durch Pfropfung mit einem Anhydrid einer ungesättigten Carbonsäure durch reaktive Extrusion modifiziert ist; ein EVOH, das mit Phosphorsäure, phosphoriger Säure, hypophosphoriger Säure oder Borsäure durch Vermischen im Extruder bei etwa 160 °C modifiziert ist; ein EVOH, das mit p-Hydroxybenzoesäure durch reaktive Extrusion bei etwa 250 °C unter starker Entgasung gepfropft ist; ein EVOH, das mit einem Polyamid oder einem Polyamid-Oligomer gepfropft ist,
  - worin modifizierter PVAL einen PVAL bedeutet, der durch Acetalisierung mit einem Aldehyd modifiziert ist.

9. Zusammensetzung nach Anspruch 8, die mindestens ein Polyamid-Pulver und mindestens ein Pulver aus einem modifizierten EVOH und/oder einem modifizierten PVAL, nicht jedoch ein Pulver aus Copolymer (A) enthält,

  - worin modifiziertes EVOH bedeutet: ein EVOH, das durch Pfropfung mit einem Anhydrid einer ungesättigten Carbonsäure durch reaktive Extrusion modifiziert ist; ein EVOH, das mit Phosphorsäure, phosphoriger Säure, hypophosphoriger Säure oder Borsäure durch Vermischen im Extruder bei etwa 160 °C modifiziert ist; ein EVOH, das mit p-Hydroxybenzoesäure durch reaktive Extrusion bei etwa 250 °C unter starker Entgasung gepfropft ist; ein EVOH, das mit einem Polyamid oder einem Polyamid-Oligomer gepfropft ist,
  - worin modifizierter PVAL einen PVAL bedeutet, der durch Acetalisierung mit einem Aldehyd modifiziert ist.

10. Zusammensetzung (i) nach einem der Ansprüche 1 bis 9, die mindestens enthält: ein Polyamid und

  - entweder ein Copolymer (A)
  - oder das Copolymer (A) und ein gegebenenfalls modifiziertes EVOH und/oder einen gegebenenfalls modifizierten PVAL
  - oder ein modifiziertes EVOH und/oder einen modifizierten PVAL und kein Copolymer (A), und

    (ii) die in Form eines Pulvers vorliegt, wobei (iii) die verschiedenen Bestandteile der Zusammensetzung auf Körner eines Pulvers, das aus einem einzigen Bestandteil gebildet ist, und Körner eines Pulvers, das aus mehreren Bestandteilen gebildet ist, verteilt sind,

  - worin modifiziertes EVOH bedeutet: ein EVOH, das durch Pfropfung mit einem Anhydrid einer ungesättigten Carbonsäure durch reaktive Extrusion modifiziert ist; ein EVOH, das mit Phosphorsäure, phosphoriger Säure, hypophosphoriger Säure oder Borsäure durch Vermischen im Extruder bei etwa 160 °C modifiziert ist; ein EVOH, das mit p-Hydroxybenzoesäure durch reaktive Extrusion bei etwa 250 °C unter starker Entgasung gepfropft ist; ein EVOH, das mit einem Polyamid oder einem Polyamid-Oligomer gepfropft ist,

- worin modifizierter PVAL einen PVAL bedeutet, der durch Acetalisierung mit einem Aldehyd modifiziert ist.

11. Zusammensetzungen (i) nach den Ansprüchen 1 bis 9, **dadurch gekennzeichnet, daß** sie in Form einer Polyamidmatrix vorliegen, in der verteilt sind:

(i) Kügelchen aus Copolymer (A) oder
(ii) Kügelchen aus Copolymer (A) und gegebenenfalls modifiziertem EVOH und/oder gegebenenfalls modifiziertem PVAL oder
(iii) Kügelchen aus modifiziertem EVOH und/oder modifiziertem PVAL,

- worin modifiziertes EVOH bedeutet: ein EVOH, das durch Pfropfung mit einem Anhydrid einer ungesättigten Carbonsäure durch reaktive Extrusion modifiziert ist; ein EVOH, das mit Phosphorsäure, phosphoriger Säure, hypophosphoriger Säure oder Borsäure durch Vermischen im Extruder bei etwa 160 °C modifiziert ist; ein EVOH, das mit p-Hydroxybenzoesäure durch reaktive Extrusion bei etwa 250 °C unter starker Entgasung gepfropft ist; ein EVOH, das mit einem Polyamid oder einem Polyamid-Oligomer gepfropft ist,
- worin modifizierter PVAL einen PVAL bedeutet, der durch Acetalisierung mit einem Aldehyd modifiziert ist.

12. Zusammensetzung nach einem der Ansprüche 1 bis 11, die außerdem Additive enthält.

13. Verbundmaterial, das einen metallischen Träger und eine Beschichtung umfaßt, die aus Pulvern nach einem der Ansprüche 1 bis 12 gebildet ist.

14. Verbundmaterial nach Anspruch 13, wobei die Schicht aus Pulvern geschmolzen wurde, um eine Beschichtung zu erzeugen.